(19) Europäisches Patentamt / European Patent Office / Office européen des brevets

(11) **EP 1 491 791 B1**

(12) **FASCICULE DE BREVET EUROPEEN**

(45) Date de publication et mention de la délivrance du brevet:
**23.12.2015 Bulletin 2015/52**

(51) Int Cl.:
***F16F 7/10*** *(2006.01)*

(21) Numéro de dépôt: **04291614.8**

(22) Date de dépôt: **25.06.2004**

(54) **Batteur dynamique actif**

Dynamischer, aktiver Resonator

Active dynamic resonator

(84) Etats contractants désignés:
**AT BE BG CH CY CZ DE DK EE ES FI FR GB GR HU IE IT LI LU MC NL PL PT RO SE SI SK TR**

(30) Priorité: **26.06.2003 FR 0307721**

(43) Date de publication de la demande:
**29.12.2004 Bulletin 2004/53**

(73) Titulaire: **HUTCHINSON**
**75008 Paris (FR)**

(72) Inventeur: **Noe, Mathieu**
**91610 Ballancourt (FR)**

(74) Mandataire: **Reboussin, Yohann Mickaël Noël et al**
**Cabinet Orès**
**36, rue de St Pétersbourg**
**75008 Paris (FR)**

(56) Documents cités:
**EP-A- 0 821 180       EP-A- 0 872 662**
**EP-A- 1 001 184       WO-A-93/21687**
**US-A- 5 251 863       US-A- 5 478 043**
**US-B1- 6 193 206**

• **"INERTIA-WHEEL VIBRATION-DAMPING SYSTEM" NTIS TECH NOTES, US DEPARTMENT OF COMMERCE. SPRINGFIELD, VA, US, 1 octobre 1990 (1990-10-01), pages 854,1-2, XP000171514 ISSN: 0889-8464**

**Description**

La présente invention a pour objet un batteur dynamique actif comprenant un ensemble masse-ressort actionné par un moteur d'entraînement et présentant un dispositif de couplage à une structure hôte à amortir.

Les batteurs dynamiques sont largement utilisés dans l'industrie pour éviter la propagation de vibrations dans une structure donnée :

- élimination d'une vibration à une fréquence donnée (par ex machine tournante)
- amortissement d'un mode propre de structure pouvant être excité soit par des vibrations de type harmoniques ou aléatoire / chocs.

Leur principe de fonctionnement repose sur un système masse-ressort. On distingue plusieurs paramètres importants des batteurs :

- la masse M
- la fréquence d'accord F
- le facteur de qualité Q

On caractérise le batteur par son impédance mécanique Z au niveau de l'interface de fixation avec la structure de base (ou structure hôte) à amortir.
On pose :

- F : effort de liaison entre la structure de base et le batteur
- v : vitesse vibratoire au point de liaison entre la structure de base et le batteur
- Z = F / v est alors l'impédance mécanique du batteur et cette caractéristique est indépendante de la structure de base.

On démontre que l'impédance complexe de ce batteur s'écrit (p est la variable de Laplace : p =j*ω) :

$$Z_B = \frac{M * p * \left(Q + \dfrac{p}{\omega_0}\right)}{Q\left(1 + \dfrac{p^2}{\omega_0{}^2}\right) + \dfrac{p}{\omega_0}}$$

Soit en module :

$$\| Z \| = \frac{M*\omega \sqrt{Q^2 + \dfrac{\omega^2}{\omega_0{}^2}}}{\sqrt{Q^2\left(1 - \dfrac{\omega^2}{\omega_0{}^2}\right)^2 + \dfrac{\omega^2}{\omega_0{}^2}}}$$

Avec :
♦ ω = 2π*f, f étant la fréquence perturbatrice
♦ $\omega_0$ = 2π*$f_0$, la pulsation propre du batteur : $\omega_0{}^2$ = K/M Q est relié à la raideur et à l'amortissement par :

| Modèle d'amortissement | |
|---|---|
| Visqueux (C) | Hystérétique |
| $Q = \dfrac{\sqrt{KM}}{C}$ | $Q = \dfrac{1}{\eta}$ |

On démontre que la valeur maximale de cette impédance est:

$$Z_B = M * \omega_0 \sqrt{1 + Q^2} \approx M * \omega_0 * Q \text{ pour } Q \geq 3$$

Exemple :

On note que l'impédance est maximale en module à la fréquence d'accord du batteur et que la phase est égale à zéro.

A cette fréquence particulière, le batteur possède exactement les caractéristiques d'un amortisseur visqueux dont le facteur ou "visquance" est défini comme étant égal au module de Z.

On connaît déjà de la demande de Brevet EP 1001184 (LORD Corporation) un batteur dynamique associé à une structure dont on traite seulement le premier mode de flexion. A cet effet, deux capteurs espacés l'un de l'autre sont placés sur la poutre encastrée à amortir et un modèle de la structure équipée de l'actionneur est utilisé pour définir la loi de correction à appliquer au signal de consigne à appliquer à l'amplificateur de puissance qui alimente l'actionneur. Les performances de ce batteur dépendent donc étroitement de l'adéquation du modèle utilisé, avec de plus des risques d'instabilité si le modèle s'éloigne des conditions réelles lorsque celles-ci évoluent.

Un objet de la présente invention est d'élargir la gamme de fréquence dans laquelle le batteur présente la caractéristique d'un amortisseur visqueux.

Un autre objet de l'invention est un batteur actif pour lequel la loi de correction à appliquer soit relativement simple à déterminer.

Un autre objet est de pouvoir choisir à loisir le niveau d'amortissement souhaité (la valeur de la visquance).

Un autre objet de l'invention est un batteur dynamique qui soit plus rapide qu'un batteur passif sur des transitoires.

Pour atteindre au moins un des objets précités, l'idée de base de l'invention est d'ajouter à la caractéristique passive du batteur une composante active qui modifie l'impédance mécanique, ce qui permet d'augmenter l'efficacité du système.

Il est prévu d'un générateur d'effort mécanique (actionneur) entre la masse M et la structure de base. Cet actionneur peut être mis en oeuvre de diverses manières sans que cela modifie le principe ou les objectifs de l'invention :

- actionneur électrodynamique ("voice coil")
- actionneur électromagnétique (réluctance variable)
- actionneur piézocéramique ou magnétostrictif.

L'invention concerne ainsi un batteur dynamique selon la revendication 1 comprenant entre autres un ensemble masse-ressort, cet ensemble ayant une masse M et une raideur K, actionné par un moteur d'entraînement et présentant un dispositif de couplage à une structure hôte à amortir, caractérisé en ce qu'il présente un premier capteur d'accélération solidaire de ladite masse et délivrant un premier signal $S_1$ et un deuxième capteur d'accélération destiné à être monté sur la structure hôte et délivrant un deuxième signal $S_2$, ainsi qu'un amplificateur de puissance fournissant en sortie un signal de commande du moteur d'entraînement en réponse à un signal d'entrée E fonction d'une différence entre les signaux $(S_1, S_2)$ du deuxième et du premier capteur d'accélération après passage d'au moins un desdits signaux $(S_1, S_2)$ par au moins un filtre passe-bas et/ou à retard de phase.

Le batteur peut être caractérisé en ce que :

$$E = G_1 ( S_1 - G_2 S_2 )$$

$$\text{avec } G_1 = g_1/(1 + p/\omega_1)$$

$$\text{et } G_2 = g_2/(1 + p/\omega_2)$$

$$\text{avec } \omega_1 = 2\pi fc_1 \quad \omega_2 = 2\pi fc_2$$

$$\text{et } fc_1 \text{ et } fc_2 < f_0/2$$

$f_0 = \omega_0/2\pi$ désignant la fréquence propre du batteur avec $\omega_0^2 = K/M$.

L'invention concerne également un batteur caractérisé en ce que :

$$E = G_1 ( s_1 - G_2 s_2)$$

$$\text{avec } G_1 = g_1/(1 + ap/\omega'_0)/ 1 + p/\omega'_0)$$

$$\text{et } G_2 = g_2/(1 + p/\omega_2)$$

$$\text{avec } a \geq 8 ; \quad \omega'_0 = 2\pi f_0 a/4 ; \quad \omega_2 = 2\pi fc_2$$

$$\text{et } fc_2 < f_0/2$$

$f_0 = \omega_0/2\pi$ désignant la fréquence propre du batteur.

L'invention concerne également un procédé d'utilisation d'un batteur dynamique tel que défini ci-dessus, caractérisé en ce que sa fréquence propre

$$fo = \frac{\sqrt{K/M}}{2\pi}$$

est avantageusement choisie sensiblement égale à la fréquence d'un mode de la structure hôte, de préférence le premier mode de la structure hôte.

D'autres caractéristiques de l'invention apparaîtront à la lecture de la description ci-après en liaison avec les dessins dans lesquels :

- la figure 1 est un schéma générique d'un batteur dynamique passif à amortissement visqueux,
- la figure 2 représente le module et la phase de l'impédance d'un tel batteur en fonction de la fréquence,
- la figure 3a est un exemple d'architecture mécanique d'un batteur actif selon l'invention, la figure 3b représentant un exemple de mise en oeuvre des deux boucles d'asservissement,
- la figure 4 illustre la courbe de réponse en module en phase d'un filtre passe-bas utilisé pour les boucles d'asservissement du batteur de la figure 3, les figures suivantes 5a à 7 illustrant le cas de la mise en oeuvre de filtres passe-bas pour une structure hôte présentant un seul mode à amortir,
- les figures 5a et 5b représentent en module et en phase la courbe de réponse de la première boucle à l'état ouvert (Fig. 5a) et à l'état fermé (fig. 5b), la figure 5c, la courbe de réponse lorsque la première boucle est fermée et la deuxième boucle est ouverte,
- la figure 6 est un exemple de gain vibratoire (en fonction de la fréquence) apporté sur la structure hôte pour un batteur actif selon l'invention,
- la figure 7 montre trois courbes de réponse fréquentielles à des excitations produites par un pot vibrant pour l'ensemble masse-ressort, le ressort étant en l'occurrence une lame flexible (courbe I), pour le batteur dynamique en mode passif (courbe II), et enfin pour le batteur dynamique en mode actif suivant l'invention (courbe III),

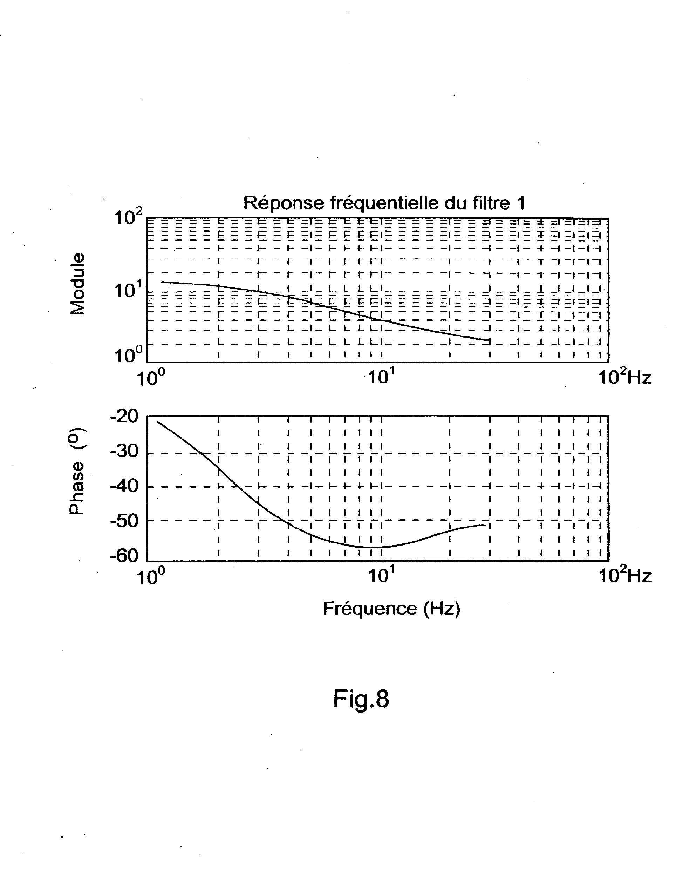

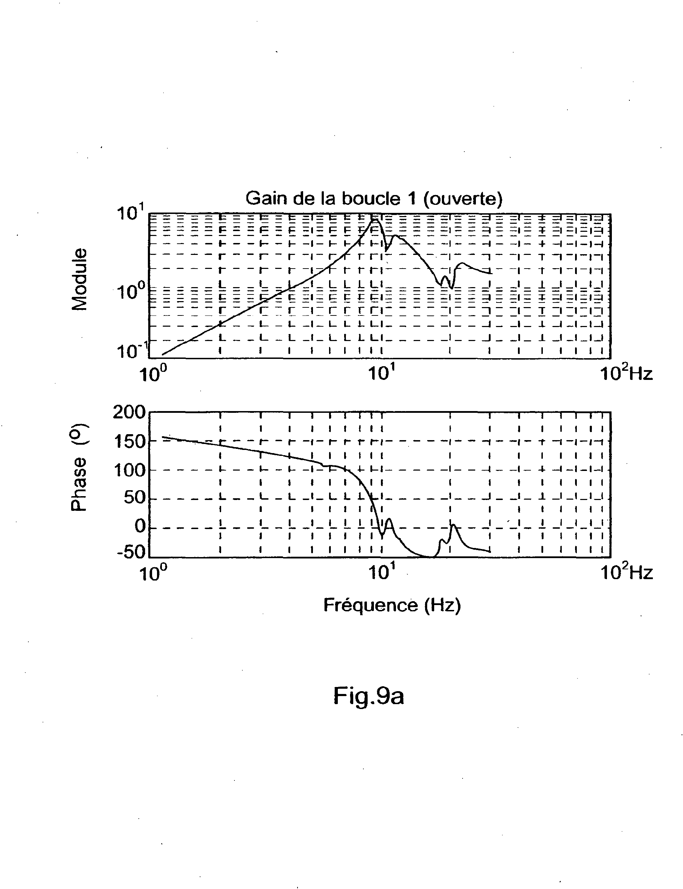

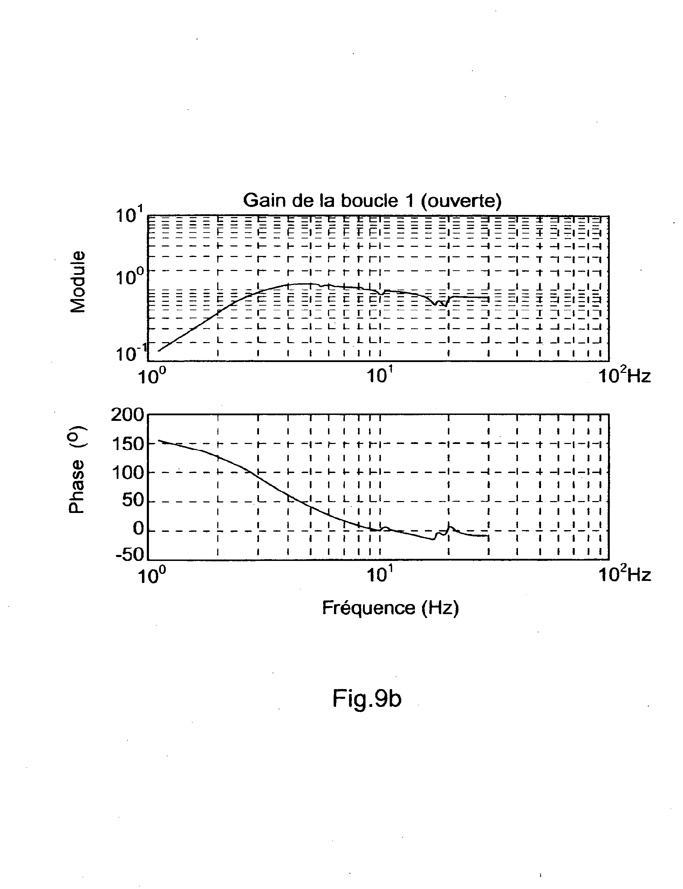

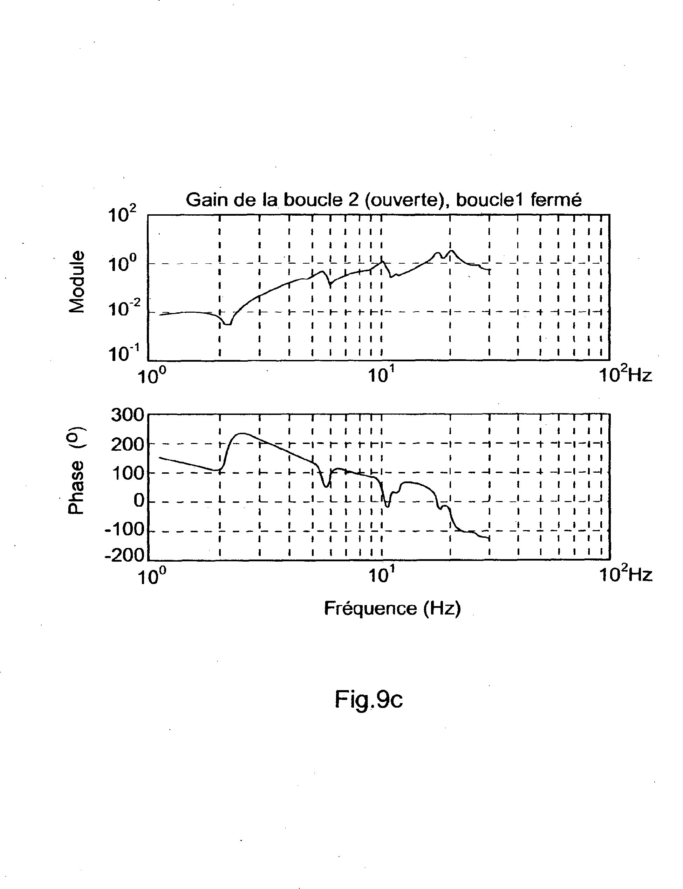

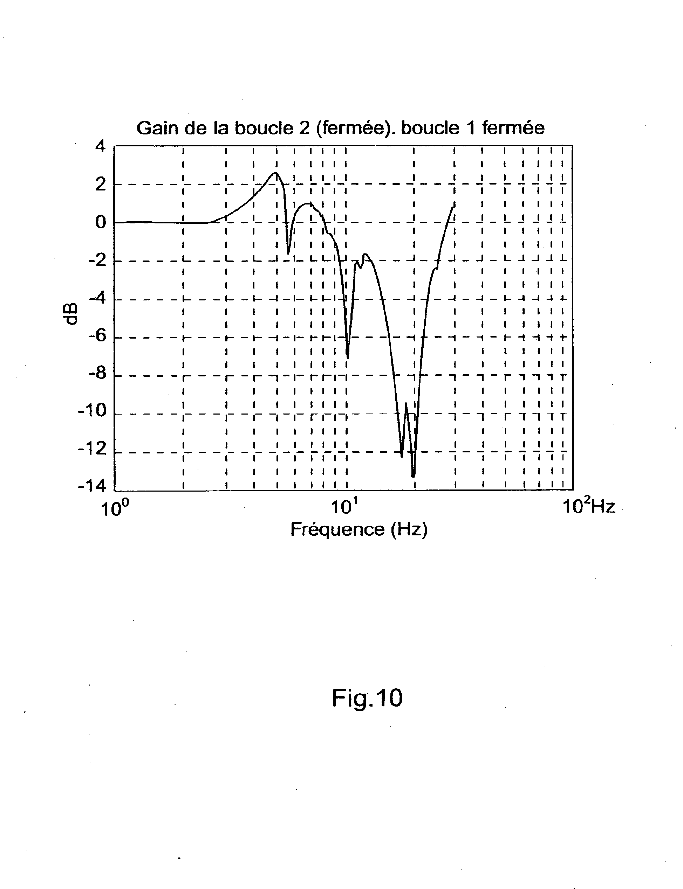

- les figures 8 à 10 sont relatives à la mise en oeuvre de filtres convenant plus particulièrement à l'amortissement de plusieurs modes d'une structure hôte, la figure 8 représentant le module (gain) et la phase du filtre F1 de type passebande, et les figures 9a à 9c représentant respectivement le module et la phase de la courbe de réponse de la première boude à l'état ouvert ( Fig. 9a), à l'état fermé (Fig.9b) et le module et la phase de la deuxième boude à l'état ouvert, la première boucle étant fermée (Fig.9c), alors que la Figure 10 illustre le gain sur la réponse obtenu sur la structure hôte.

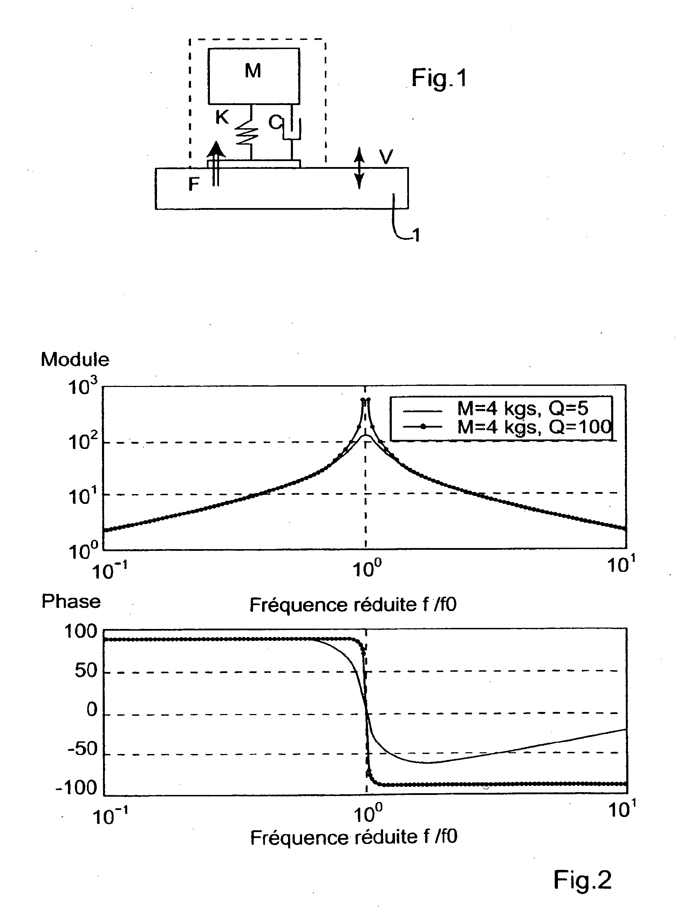

La figure 1 montre un batteur passif de masse M, de raideur K correspondant à une résonance à la fréquence f0 et présentant un amortissement visqueux C.

La figure 2 montre la courbe de réponse (module et phase) de ce batteur passif.

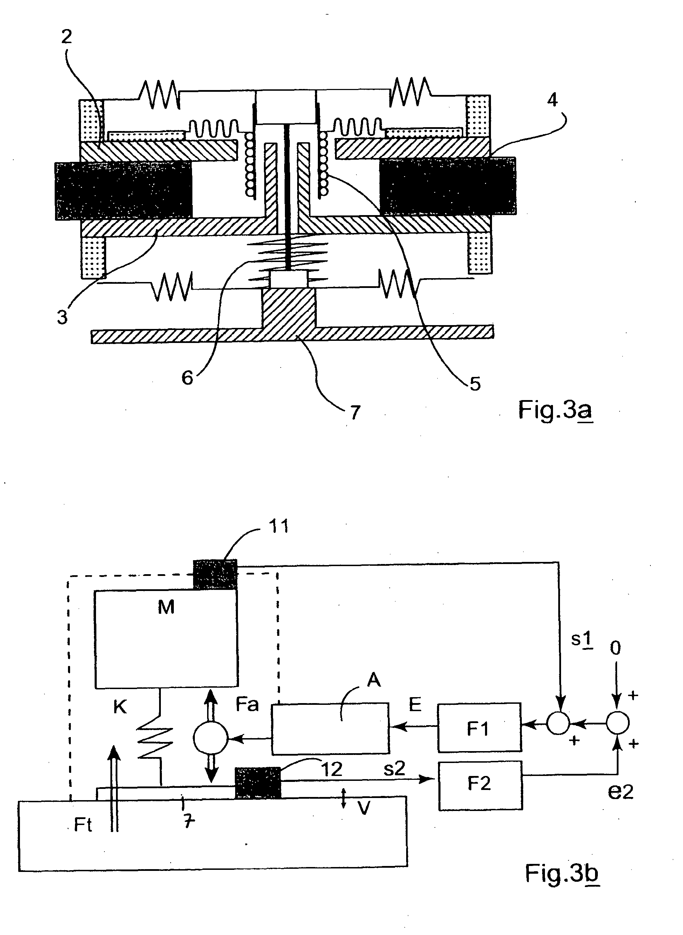

Selon la figure 3a, la masse M du batteur est constituée pour l'essentiel par le circuit magnétique de l'actionneur, à savoir la pièce polaire supérieure 2, la pièce polaire inférieure 3, et l'aimant 4.

La bobine 5 de l'actionneur est reliée à une embase 7 et un ressort 6 (par exemple une lame flexible) est interposé entre la pièce polaire inférieure 3 et l'embase 7.

On accorde avantageusement le batteur à la fréquence f0 d'un mode d'une structure 1 à amortir: ceci garantit une consommation en puissance minimale, car l'effort Fa de l'actionneur est alors minimal. Le mode est de préférence le premier mode de la structure 1 à amortir. Dans cette configuration, on évite d'avoir à surdimensionner l'actionneur, car il profite de sa propre résonance.

Ceci introduit par contre une rotation de phase supplémentaire dans les fonctions de transfert entre la consigne (entrée amplificateur) et les accélérations (masse mobile et structure).

L'architecture de contrôle selon l'invention permet de contourner la difficulté introduite par ce déphasage : la première boucle d'asservissement permet de retrouver une fonction de transfert dans laquelle la rotation de phase est ramenée à presque zéro sur l'ensemble de la bande de fréquence utile.

Accessoirement, si le dispositif n'est plus "actif' (perte d'un capteur ou de la puissance), le système se comporte comme un batteur passif accordé, ce qui est une situation de repli acceptable.

Le schéma électrique du système de commande (fig. 3b) comporte 2 boucles d'asservissement successives :

- une première boucle pour l'accéléromètre 11 (solidaire de la masse M)
- une deuxième boucle pour l'accéléromètre 12 (solidaire de la structure hôte 20).

On referme d'abord la première, puis la deuxième boucle en vérifiant à chaque fois que ces boucles sont stables, avec suffisamment de marge de stabilité (marge de phase et de gain).

Ces deux boucles définissent un signal de consigne qui est amplifié et vient alimenter la bobine 5 de l'actionneur (symbolisé à la fig. 3b par un générateur d'effort Fa).

La force Fa est proportionnelle au signal de consigne E en entrée de l'amplificateur de puissance A :

- si l'amplificateur fonctionne en source de tension, cette hypothèse est vraie tant que l'on reste dans une bande de fréquence inférieure à la constante de temps électrique de l'actionneur
- si l'amplificateur A fonctionne en asservissement de courant , cette hypothèse est vraie tant que l'on reste dans une bande de fréquence correspondant à la bande de fréquence où l'amplificateur fonctionne effectivement en source de courant (ce qui correspond à la bande de fréquence avec asservissement en courant). Cette bande de fréquence est plus large comparée au fonctionnement en source de tension. Cette architecture est préférable dès que l'on veut faire fonctionner le batteur sur des modes en haute fréquence.

Le premier capteur 11 solidaire de la masse M génère un signal d'accélération $s_1$ qui est appliqué en contre réaction à l'entrée de l'amplificateur de puissance A après filtrage par un filtre $F_1$ (première boucle).

Le deuxième capteur 12 solidaire de la structure de base 1 génère un signal d'accélération $s_2$ qui est filtré par un filtre $F_2$ (signal $e_2$), la différence entre $e_2$ et $s_1$ étant appliquée à l'entre du filtre $F_1$. Pour la forme, on a indiqué un signal de consigne nul, puisqu'il s'agit de calmer la structure de base 1 à l'aide du batteur actif et donc d'annuler la différence entre $s_1$ et $e_2$.

Le réglage mécanique du batteur s'effectue en: accordant le batteur de préférence à la fréquence f0 du premier mode de la structure 1. Ceci garantit une consommation en puissance minimale (Fa est minimal).

Dans le cas où la structure de base ne présente qu'un mode à amortir, le filtre F1 est un filtre passe bas ordre 1 de réponse G1(p) :

$$G1(p) = g1/(1+p/\omega_1);$$

$\omega_1 = 2\pi fc1$ ; fc1 = fréquence de coupure avec fc1 < f0 / 2.

Le gain g1 doit être maximal tout en ne provoquant pas de comportement instable. Une méthode pratique est détecter un début d'oscillation et de diminuer g1 de 6 dB par rapport à cette valeur limite.

Le filtre F2 est également un filtre passe bas d'ordre 1 de réponse G2(p) :

$$G2(p) = g2/(1+p/\omega2) ;$$

$$\omega2 = 2\pi fc2 ;$$

fc2 = fréquence de coupure avec fc2 < f0 / 2.

Le gain g2 doit être maximal tout en ne provoquant pas de comportement instable.

Une méthode pratique est détecter un début d'oscillation et de diminuer g2 de 6 dB par rapport à cette valeur limite.

La loi de correction (gains G1 et G2 des filtres) est donc relativement facile à déterminer.

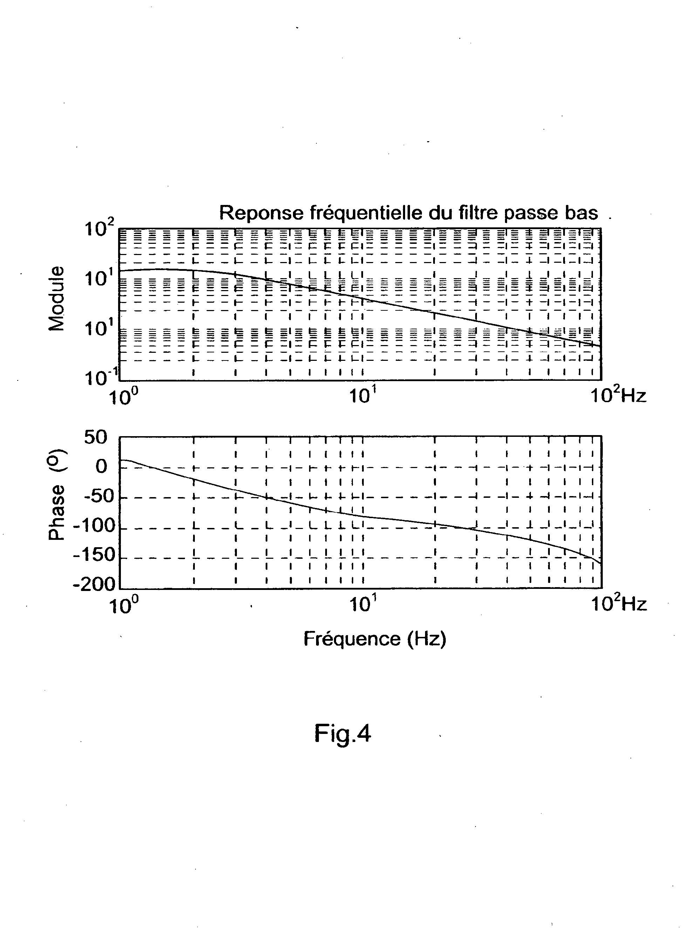

La figure 4 montre l'allure des courbes de gain et de phase pour les filtres $F_1$ et $F_2$, en tenant compte des facteurs dégradants constitués par la présence d'un filtre passe haut du premier ordre dans le cas d'un accéléromètre piézocéramique, et d'un déphasage linéaire dans le cas d'une implémentation numérique (qui vaut $(f/f_s) \times 360$ en degrés, $f_s$ étant la fréquence d'échantillonnage, et f la fréquence du signal à échantillonner).

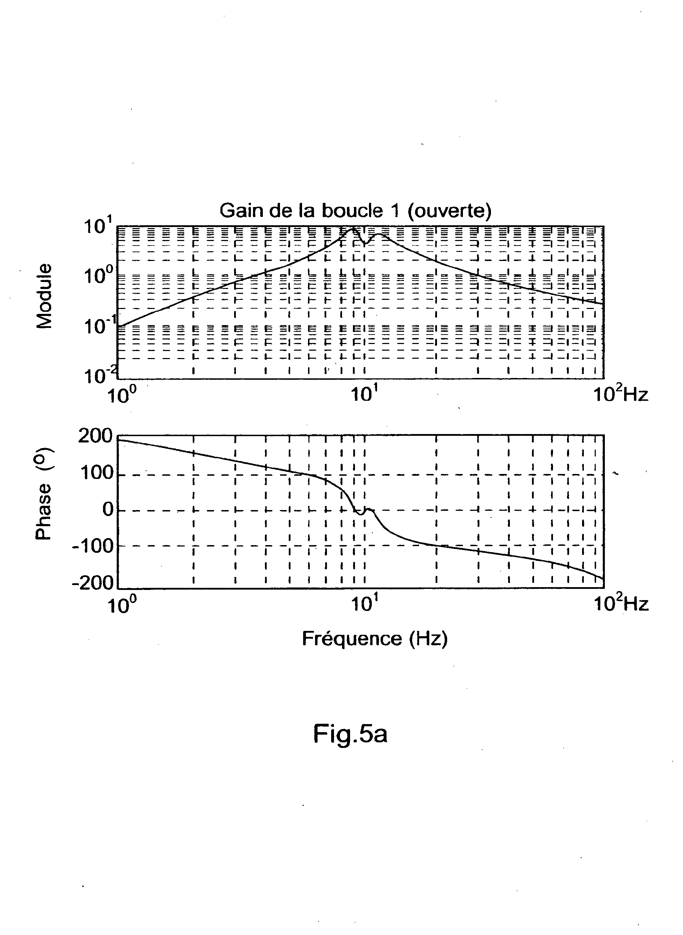

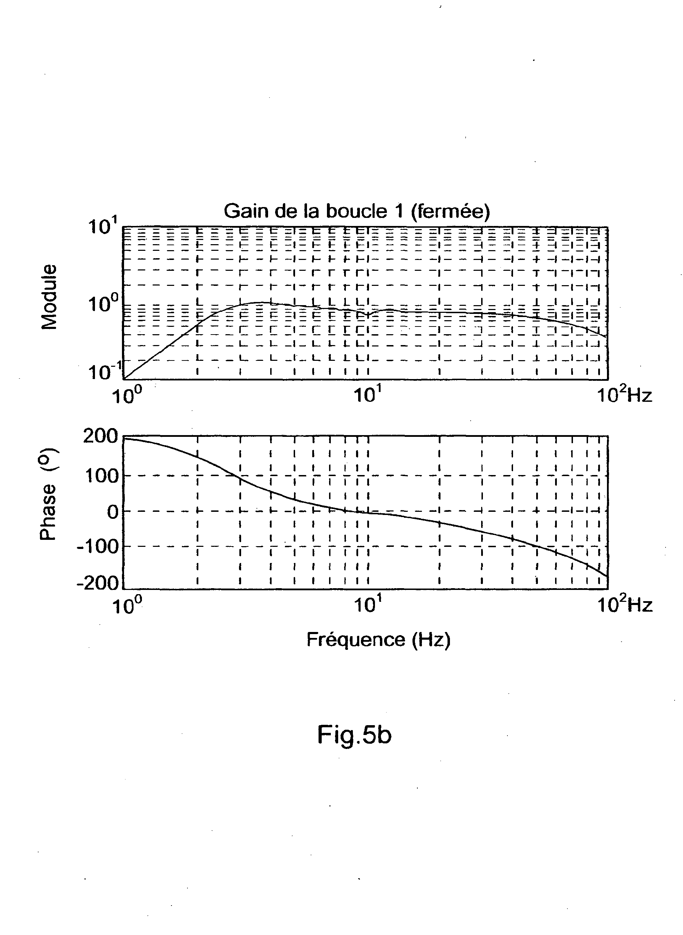

Le gain de la première boucle (ouverte) est représenté à la figure 5a, et de cette même boucle à l'état fermé à la figure 5b.

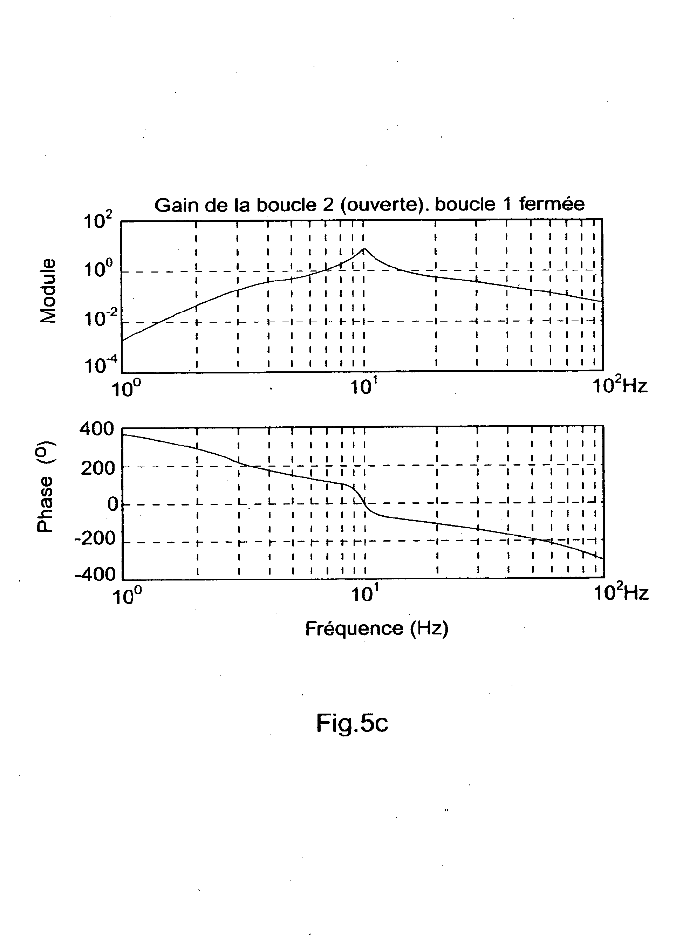

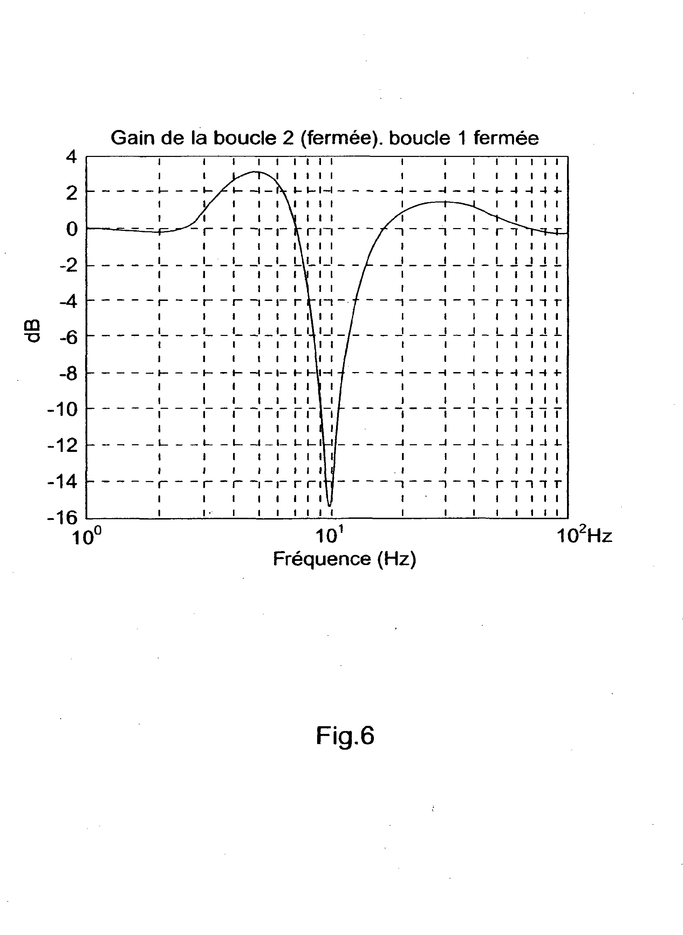

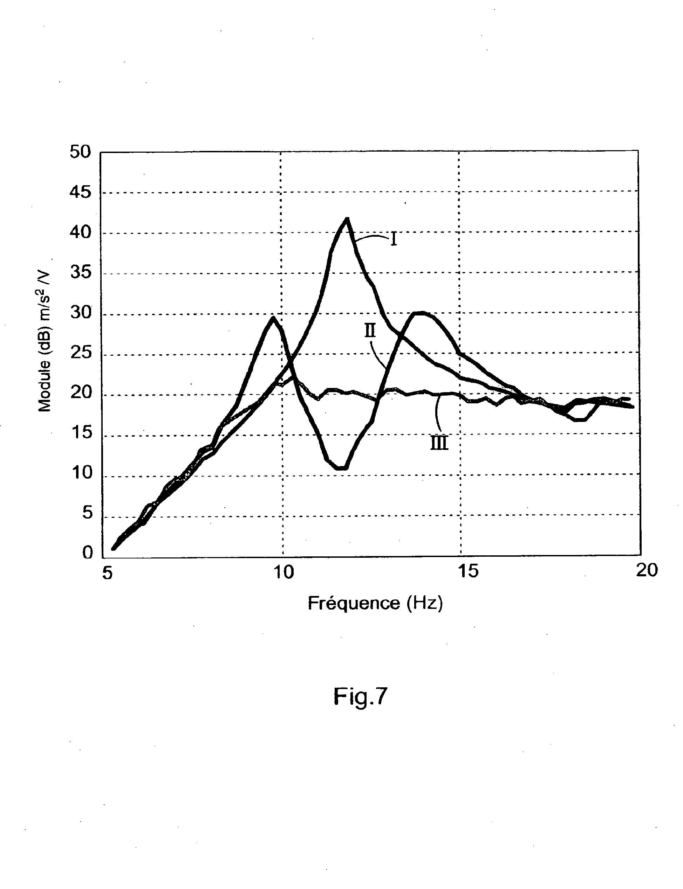

La figure 5c montre le gain de la deuxième boucle à l'état ouvert (la première boucle étant fermée). Dans la bande de fréquences (ici entre 8 et 12 Hz) où le gain (module) de cette boucle est supérieur à 1, on obtient un gain vibratoire sur la structure hôte. Ce gain est illustré à la figure 6, le gain atteignant ici 16dB à la fréquence $f_o$ = 10Hz du mode choisi de la structure 1. On constate par contre, mais en dehors de la résonance, une légère dégradation en deçà et au-delà de la fréquence $f_o$ = 10Hz. Des résultats en excitation aléatoire (bruit blanc) à l'aide d'un pot vibrant sont montrés à la figure 7.

La courbe I correspond à la réponse (accélération) de la lame flexible + masse (sans batteur) à un effort de perturbation (fourni par le pot vibrant).

La courbe II correspond à la réponse (accélération) de la lame flexible + masse + batteur (en mode passif) à un effort de perturbation (fourni par le pot vibrant) : on retrouve le dédoublement classique des modes.

La courbe III correspond à la réponse (accélération) de la lame flexible + masse + batteur (en mode actif) à un effort de perturbation (fourni par le pot vibrant) : on n'a plus le dédoublement classique des modes : le système redevient comme un système à 1 seul ddl, avec amortissement important.

En mode transitoire, on constate en mode batteur passif, une période d'amortissement (pour atteindre 5 % de l'amplitude initiale) de 1,5 s., et de 0,35 s. en mode batteur actif (selon l'invention). On a donc dans cet exemple un amortissement d'environ 4 à 5 fois plus rapide qu'avec un batteur passif de même masse et amortissement.

Lorsque la structure 1 à amortir présente plusieurs modes, il est préférable d'accorder la fréquence $f_0$ du batteur sur la fréquence du premier mode de la structure à amortir, c'est-à-dire celui dont la fréquence est la plus basse ou sur le deuxième mode dont la fréquence est immédiatement supérieure à celle du premier mode. Ceci permet d'obtenir une force Fa minimale et donc de minimiser la consommation de puissance. Dans un tel cas, le filtre $F_1$ est choisi avec une réponse G'1 (p) lui conférant une fonction de retard de phase plutôt que passe-bas.

Pour le filtre $F_1$, on peut choisir :

$$G'1(p) = g_1 \times \frac{(1 + a\, p\, /\, \omega'o)}{(1 + p/\omega'o)}$$

(filtre à retard de phase) avec $a \geq 8$ la valeur de a définit la bande passante du système

$$\omega'o = 2\pi f_0 \times a/4.$$

Le gain $g_1$ est choisi maximal sans provoquer d'oscillation. Une méthode pratique est d'augmenter $g_1$ jusqu'à ce que se produise un début d'oscillation, puis de diminuer g1 de 6 dB.

Le filtre $F_2$ peut être choisi comme précédemment.

La figure 8 montre la courbe de réponse du filtre F1. On observe l'effet retardateur de phase important autour de $f_0$ = 10 Hz, tout en conservant pour le gain, une allure de filtre passe-bas dans la gamme des fréquences utiles. La première boucle fermée (Figure 9b) est plus stable en phase que dans le cas da la figure 5b.

La Figure 10 illustre le gain vibratoire sur une structure qui présente quatre modes rapprochés à amortir, à savoir un premier mode à 6Hz, un deuxième mode (sur lequel est accordée la fréquence f0 du batteur actif) à 10 Hz, un troisième mode à 17Hz, et enfin un quatrième mode à 20Hz. Le deuxième mode (à 10 Hz) est le premier mode pour lequel un amortissement est recherché. A 6 Hz, le gain vibratoire est de 2dB, Il est de 7dB à 10Hz, de 12dB à 17Hz et de 14dB à 20Hz. La mise en oeuvre d'un filtre F1 à retard de phase permet ainsi d'étendre la plage fréquentielle utile du batteur actif.

**Revendications**

1. Batteur dynamique comprenant un ensemble masse-ressort, cet ensemble ayant une masse M et une raideur K, actionné par un moteur d'entraînement et présentant un dispositif de couplage à une structure hôte à amortir, le batteur présentant un premier capteur d'accélération (11) délivrant un premier signal $s_1$ et un deuxième capteur d'accélération (12) destiné à être monté sur la structure hôte et délivrant un deuxième signal $s_2$, ainsi qu'un amplificateur de puissance (A) fournissant en sortie un signal de commande du moteur d'entraînement en réponse à un signal d'entrée E, **caractérisé en ce que** le premier capteur est solidaire de la masse M, **en ce que** le batteur comprend une première et une deuxième boucle d'asservissement respectivement pour les premier et deuxième capteurs, et **en ce que** le signal d'entrée E est défini par ces deux boucles et est fonction d'une différence entre les signaux ($s_1$, $s_2$) du deuxième et du premier capteur d'accélération après passage d'au moins un desdits signaux ($s_1$, $s_2$) par au moins un filtre ($F_1$, $F_2$) passe-bas et/ou d'un type à retard de phase.

2. Batteur selon la revendication 1, **caractérisé en ce que** le signal d'accélération ($s_1$) délivré par le premier capteur (11) est appliqué en contre réaction à l'entrée de l'amplificateur de puissance (A) après filtrage par ledit filtre ($F_1$), ou premier filtre de ladite première boucle, et **en ce que** le signal d'accélération ($s_2$) délivré par le deuxième capteur (12) est filtré par ledit filtre ($F_2$), ou deuxième filtre de ladite deuxième boucle, pour générer un signal $e_2$, la différence entre $e_2$ et $s_1$ étant appliquée à l'entrée dudit premier filtre ($F_1$).

3. Batteur selon la revendication 2, **caractérisé en ce que** le signal d'entrée E vérifie la relation E = $G_1$ ($s_1$- $G_2 s_2$) où $G_1$ et $G_2$ sont les réponses respectives desdits premier et deuxième filtres ($F_1$ et $F_2$),

   avec $G_1 = g_1/(1 + p/\omega_1)$ et $G_2 = g_2/(1 + p/\omega_2)$
   avec p = jω ; $\omega_1 = 2\pi fc_1$ $\omega_2 = 2\pi fc_2$
   et $fc_1$ et $fc_2 < f_0/2$,

   $f_0 = \omega_0/2\pi$ désignant la fréquence propre du batteur avec $\omega_0^2$ = K/M, $fc_1$ et $fc_2$ étant les fréquences de coupure et g1 et g2 les gains respectifs desdits premier et deuxième filtres.

4. Batteur selon la revendication 1 ou 2, **caractérisé en ce que** le signal d'entrée E vérifie la relation E = $G_1$ ($s_1$ - $G_2 s_2$) où $G_1$ et $G_2$ sont les réponses respectives desdits premier et deuxième filtres ($F_1$ et $F_2$),

   avec $G_1 = g_1/(1 + ap/\omega'_0)/ 1 + p/\omega'_0)$ et $G_2 = g_2/(1 + p/\omega_2)$
   avec a ≥ 8 ; p = jω ; $\omega'_0 = 2\pi f_0 a/4$ ; $\omega_2 = 2\pi fc_2$
   et $fc_2 < f_0/2$

   $f_0 = \omega_0/2\pi$ désignant la fréquence propre du batteur, g1 et g2 les gains respectifs desdits premier et deuxième filtres et $fc_2$ la fréquence de coupure du deuxième filtre.

5. Procédé d'utilisation d'un batteur dynamique selon une des revendications 1 à 4, **caractérisé en ce que** la fréquence propre

$$fo = \frac{\sqrt{K/M}}{2\pi}$$

est choisie sensiblement égale à la fréquence d'un mode de la structure hôte.

6. Procédé selon la revendication 5, **caractérisé en ce que** ledit mode est le premier mode de la structure hôte pour lequel un amortissement est recherché.

7. Procédé selon la revendication 5, **caractérisé en ce que** ledit mode est le premier mode de la structure hôte.

**Patentansprüche**

1. Dynamischer Resonator, umfassend eine Masse-FederAnordnung, wobei diese Anordnung eine Masse M und eine Steifigkeit K aufweist, der von einem Antriebsmotor betätigt wird und eine Vorrichtung zum Koppeln an eine abzufedernde Hoststruktur aufweist, wobei der Resonator einen ersten Beschleunigungssensor (11), der ein erstes Signal $s_1$ liefert, und einen zweiten Beschleunigungssensor (12), der dazu bestimmt ist, auf der Hoststruktur angebracht zu werden und ein zweites Signal $s_2$ liefert, und einen Leistungsverstärker (A) aufweist, der im Ausgang ein Steuersignal des Antriebsmotors als Antwort auf ein Eingangssignal E liefert, **dadurch gekennzeichnet, dass** der erste Sensor mit der Masse M fest verbunden ist, dass der Resonator eine erste und eine zweite Regelschleife jeweils für den ersten und zweiten Sensor aufweist, und dass das Eingangssignal E durch diese zwei Schleifen definiert ist und eine Funktion der Differenz zwischen den Signalen ($s_1$, $s_2$) des zweiten und des ersten Beschleunigungssensors nach dem Passieren von mindestens einem der Signale ($s_1$, $s_2$) durch mindestens einen Tiefpassfilter ($F_1$, $F_2$) und/oder einen Phasenverzögerungsfilter ist.

2. Resonator nach Anspruch 1, **dadurch gekennzeichnet, dass** das Beschleunigungssignal ($s_1$), das von dem ersten Sensor (11) geliefert wird, nach dem Filtern durch den Filter ($F_1$) oder den ersten Filter der ersten Schleife als Rückkoppelung an den Eingang des Leistungsverstärkers (A) angelegt wird, und dass das Beschleunigungssignal ($s_2$), das von dem zweiten Sensor geliefert (12) geliefert wird, durch den Filter ($F_2$) oder den zweiten Filter der zweiten Schleife gefiltert wird, um ein Signal $e_2$ zu erzeugen, wobei die Differenz zwischen $e_2$ und $s_1$ an den Eingang des ersten Filters ($F_1$) angelegt wird.

3. Resonator nach Anspruch 2, **dadurch gekennzeichnet, dass** das Eingangssignal E die Beziehung E = $G_1$ ($s_1$ - $G_2 s_2$) prüft, wobei $G_1$ und $G_2$ die jeweiligen Antworten des ersten und zweiten Filters ($F_1$ und $F_2$) sind,

   mit $G_1 = g_1/(1 + p/\omega_1)$ und $G_2 = g_2/(1 + p/\omega_2)$
   mit $p = j\omega$ ; $\omega_1 = 2\pi fc_1$ $\omega_2 = 2\pi fc_2$
   und $fc_1$ und $fc_2 < f_0/2$,
   wobei $f_0 = \omega_0/2\pi$ die eigene Frequenz des Resonators bezeichnet, wobei
   $\omega_0^2 = K/M$, $fc_1$ und $fc_2$ die Grenzfrequenzen und g1 und g2 die jeweiligen Verstärkungen des ersten und zweiten Filters sind.

4. Resonator nach Anspruch 1 oder 2, **dadurch gekennzeichnet, dass** das Eingangssignal E die Beziehung E = $G_1$ ($s_1$ - $G_2 s_2$) prüft, wobei $G_1$ und $G_2$ die jeweiligen Antworten des ersten und zweiten Filters ($F_1$ und $F_2$) sind,

   mit $G_1 = g_1/(1 + ap/\omega'_0)/ 1 + p/\omega'_0)$ und $G_2 = g_2/(1 + p/\omega_2)$
   mit $a \geq 8$ ; $p = j\omega$ : $\omega'_0 = 2\pi f_0 a/4$ ; $\omega_2 = 2\pi fc_2$
   und $fc_2 < f_0/2$
   wobei $f_0 = \omega_0/2\pi$ die Eigenfrequenz des Resonators, g1 und g2 die jeweiligen Verstärkungen des ersten und zweiten Filters und $fc_2$ die Grenzfrequenz des zweiten Filters bezeichnet.

5. Verfahren zum Verwenden eines dynamischen Resonators nach den Ansprüchen 1 bis 4, **dadurch gekennzeichnet, dass** die Eigenfrequenz

$$fo = \frac{\sqrt{K/M}}{2\pi}$$

im Wesentlichen gleich der Frequenz eines Modus der Hoststruktur gewählt wird.

6.  Verfahren nach Anspruch 5, **dadurch gekennzeichnet, dass** der Modus der erste Modus der Hoststruktur ist, für den eine Dämpfung gesucht wird.

7.  Verfahren nach Anspruch 5, **dadurch gekennzeichnet, dass** der Modus der erste Modus der Hoststruktur ist.

## Claims

1.  A dynamic beater comprising a spring mass unit, said unit having a mass M and a stiffness K actuated by a drive motor and presenting a device for coupling to a host structure for damping, the beater presenting a first acceleration sensor (11) delivering a first signal $s_1$ and a second acceleration sensor (12) for mounting on the host structure and delivering a second signal $s_2$, and also having a power amplifier (A) supplying an output signal for controlling the drive motor in response to an input signal E, **characterized in that** the first sensor is secured to the mass M, **in that** the beater comprises a first and a second servo-control loop respectively for the first and second sensors, and **in that** the input signal E is defined by these two loops and is a function of a difference between the signals ($s_1$, $s_2$) from the second and first acceleration sensors after passing at least one of said signals ($s_1$, $s_2$) through at least one lowpass filter ($F_1$, $F_2$) and/or phase delay type filter.

2.  A beater according to claim 1, **characterized in that** the acceleration signal ($s_1$) generated by the first sensor (11) is applied as negative feedback to the input of the power amplifier (A) after being filtered through said filter ($F_1$), or first filter of said first loop, and **in that** the acceleration signal ($s_2$) generated by the second sensor (12) is filtered through said filter ($F_2$), or second filter of said second loop, to generate a signal $e_2$, the difference between $e_2$ and $s_1$ being applied to the input of said first filter ($F_1$).

3.  A beater according to claim 2, **characterized in that** the input signal E satisfies the relationship

    $E = G_1(s_1 - G_2s_2)$ where $G_1$ and $G_2$ are the respective responses of said first and second filters ($F_1$ and $F_2$),
    where $G_1 = g_1/(1 + p/\omega_1)$ and $G_2 = g_2/(1 + p/\omega_2)$
    with $p = jw$; $\omega_1 = 2\pi fc_1$ $\omega_2 = 2\pi fc_2$
    and $fc_1$ and $fc_2 < f_0/2$
    $f_0 = \omega_0/2\pi$ designating the natural frequency of the beater with $\omega_0^2 = K/M$, $fc_1$ and $fc_2$ being the cutoff frequencies
    and $g_1$ and $g_2$ the respective gains of said first and second filters.

4.  A beater according to claim 1 or 2, **characterized in that** the input signal E satisfies the relationship:

    $E = G_1 (s_1 - G_2s_2)$ where $G_1$ and $G_2$ are the respective responses of said first and second filters ($f_1$ and $f_2$),
    where $G_1 = g_1(1 + ap/\omega'_0)/(1 + p/\omega'_0)$ and $G_2 = g_2/(1 + p/\omega_2)$
    with $a \geq 8$; $p = jw$; $\omega'_0 = 2\pi f_0 a/4$ $\omega_2 = 2\pi fc_2$
    and $fc_2 < f_0/2$
    $f_0 = \omega_0/2\pi$ designating the natural frequency of the beater, $g_1$ and $g_2$ the respective gains of said first and second filters and $fc_2$ the cutoff frequency of said second filter.

5.  A method of using a dynamic beater according to one of claims 1 to 4, **characterized in that** the natural frequency

    $$f_0 = \frac{\sqrt{K/M}}{2\pi}$$

    is selected to be substantially equal to the frequency of a mode of the host structure.

6. A method according to claim 5, **characterized in that** said mode is the first mode of the host structure for which damping is desired.

7. A method according to claim 5, **characterized in that** said mode is the first mode of the host structure.

Fig.1

Module

M=4 kgs, Q=5
M=4 kgs, Q=100

Fréquence réduite f /f0

Phase

Fréquence réduite f /f0

Fig.2

Fig.3a

Fig.3b

Reponse fréquentielle du filtre passe bas

Fréquence (Hz)

Fig.4

Gain de la boucle 1 (ouverte)

Fig.5a

Fig.5b

Fig.5c

## Gain de la boucle 2 (fermée). boucle 1 fermée

Fig.6

Fig.7

Réponse fréquentielle du filtre 1

Fig.8

Fig.9a

Fig.9b

Fig.9c

Fig.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1001184 A